# EUROPEAN PATENT APPLICATION

(11) **EP 4 644 678 A2**
(43) Date of publication of application: **05.11.2025**
(21) Application number: 25173788.8
(22) Date of filing: 30.04.2025
(51) Int. Cl.: F02C 7/052, B01D 45/16

(54) **SEPARATING AIRFLOWS WITHIN AN AIRCRAFT POWERPLANT**

(30) Priority: 30.04.2024 US 202418651186
(71) Applicant: RTX Corporation, Farmington, CT 06032 (US)
(72) Inventor: HANRAHAN, Paul R., Farmington, 06032 (US); JOSHI, Dibesh D., Farmington, 06032 (US); SAFTLER, Rishon, Farmington, 06032 (US)
(74) Representative: Dehns

(57) **Abstract**

An air-debris separator (76) includes a center body (108), an inner wall (104), an outer wall (102), a separation passage (116), a first outlet passage (118) and a second outlet passage (120). The center body (108) extends longitudinally along a longitudinal centerline (122). The inner wall (104) and the outer wall (102) extend longitudinally along and circumferentially about the center body (108). The separation passage (116) extends longitudinally within the air-debris separator (76) to the first outlet passage (118) and the second outlet passage (120). The separation passage (116) is radially between the center body (108) and the outer wall (102). The separation passage (116) includes a convergent section (154) and a radial outer diameter (158) that decreases as the convergent section (154) extends longitudinally towards the first outlet passage (118) and the second outlet passage (120). The first outlet passage (118) is radially between the center body (108) and the inner wall (104). The second outlet passage (120) is formed by and radially between the inner wall (104) and the outer wall (102).

## Description

### BACKGROUND OF THE DISCLOSURE

### 1. Technical Field

This disclosure relates generally to an aircraft and, more particularly, to separating airflows within an aircraft powerplant.

### 2. Background Information

Various systems and methods are known in the art for separating airflows within an aircraft powerplant such as a gas turbine engine. While these known systems and methods have various benefits, there is still room in the art for improvement.

### SUMMARY OF THE DISCLOSURE

According to an aspect of the present disclosure, an apparatus is provided for a powerplant. This powerplant apparatus includes an air-debris separator, and the air-debris separator includes a center body, an inner wall, an outer wall, a separation passage, a first outlet passage and a second outlet passage. The center body extends longitudinally along a longitudinal centerline. The inner wall extends longitudinally along and circumferentially about the center body. The outer wall extends longitudinally along and circumferentially about the center body and the inner wall. The separation passage extends longitudinally within the air-debris separator to, and is fluidly coupled in parallel with, the first outlet passage and the second outlet passage. The separation passage is formed by and radially between the center body and the outer wall. The separation passage includes a convergent section and a radial outer diameter that decreases as the convergent section extends longitudinally towards the first outlet passage and the second outlet passage. The first outlet passage is formed by and is radially between the center body and the inner wall. The second outlet passage is formed by and radially between the inner wall and the outer wall.

According to another aspect of the present disclosure, another apparatus is provided for a powerplant. This powerplant apparatus includes an air-debris separator, and the air-debris separator includes a separation passage, a clean air outlet passage, a dirty air outlet passage and a separator swirler disposed within the separation passage. A radial outer diameter of the separation passage decreases as the separation passage extends in a downstream direction longitudinally away from the separator swirler and towards the clean air outlet passage and the dirty air outlet passage. The air-debris separator is configured to separate an airflow received within the separation passage and swirled by the separator swirler into a clean airflow and a dirty airflow. The air-debris separator is configured to direct the clean airflow into the clean air outlet passage. The air-debris separator is configured to direct the dirty airflow into the dirty air outlet passage.

According to still another aspect of the present disclosure, another apparatus is provided for a powerplant. This powerplant apparatus includes an air-debris separator, and the air-debris separator includes a center body, an inner wall, an outer wall, a separation passage, a first outlet passage, a second outlet passage and a plurality of swirler vanes. The center body extends longitudinally along a longitudinal centerline. The inner wall extends longitudinally along and circumferentially about the center body. The outer wall extends longitudinally along and circumferentially about the center body and the inner wall. The separation passage extends longitudinally within the air-debris separator to, and is fluidly coupled in parallel with, the first outlet passage and the second outlet passage. The separation passage is formed by and radially between the center body and the outer wall. The separation passage includes a convergent section and a divergent section which extends longitudinally from the convergent section towards the first outlet passage and the second outlet passage. The first outlet passage is formed by and radially between the center body and the inner wall. The second outlet passage is formed by and radially between the inner wall and the outer wall. The swirler vanes are arranged within the separation passage upstream of the convergent section. Each of the swirler vanes extends radially between the center body and the outer wall.

A cross-sectional area of the separation passage may remain within plus and minus ten percent of a reference value as the convergent section extends longitudinally to the divergent section. In addition or alternatively, the cross-sectional area of the separation passage may increase as the divergent section extends longitudinally away from the convergent section towards the first outlet passage and the second outlet passage.

The radial outer diameter of the separation passage may decrease as the separation passage extends in the downstream direction to an inflection location. The radial outer diameter of the separation passage may increase as the separation passage extends in the downstream direction away from the inflection location towards the clean air outlet passage and the dirty air outlet passage.

The separation passage may have a radial inner diameter that decreases as the convergent section extends longitudinally towards the first outlet passage and the second outlet passage and the radial outer diameter decreases.

A cross-sectional area of the separation passage may remain within plus and minus ten percent of a reference value as the convergent section extends longitudinally towards the first outlet passage and the second outlet passage and the radial outer diameter decreases.

The separation passage may also include a divergent section longitudinally between the convergent section and the first outlet passage and the second outlet passage. The radial outer diameter may increase as the divergent section extends longitudinally towards the first outlet passage and the second outlet passage.

The separation passage may also include a radial inner diameter that remains uniform as the divergent section extends longitudinally towards the first outlet passage and the second outlet passage and the radial outer diameter increases.

The divergent section may be an upstream divergent section. The separation passage may also include a downstream divergent section longitudinally between the upstream divergent section and the first outlet passage and the second outlet passage. The radial outer diameter may increase as the downstream divergent section extends longitudinally towards the first outlet passage and the second outlet passage. The radial inner diameter may decrease as the downstream divergent section extends longitudinally towards the first outlet passage and the second outlet passage and the radial outer diameter increases.

A cross-sectional area of the separation passage may increase as the divergent section extends longitudinally towards the first outlet passage and the second outlet passage and the radial outer diameter increases.

The separation passage may also include a radial inner diameter that decreases as the divergent section extends longitudinally towards the first outlet passage and the second outlet passage and the radial outer diameter increases.

A divergence angle between an outer side of the center body and an inner side of the outer wall along the divergent section may be between one degree and three degrees.

The convergent section may be a downstream convergent section. The separation passage may also include an upstream convergent section with the downstream convergent section longitudinally between the upstream convergent section and the first outlet passage and the second outlet passage. The radial outer diameter may decrease as the upstream convergent section extends longitudinally towards the first outlet passage and the second outlet passage. The separation passage may have a radial inner diameter that increases as the upstream convergent section extends longitudinally towards the downstream convergent section and the radial outer diameter increases.

The convergent section may be a downstream convergent section. The separation passage may also include an upstream convergent section with the downstream convergent section longitudinally between the upstream convergent section and the first outlet passage and the second outlet passage. A cross-sectional area of the separation passage may decrease as the upstream convergent section extends longitudinally towards the downstream convergent section.

A convergence angle between an outer side of the center body and an inner side of the outer wall along the upstream convergent section may be between fifteen degrees and fifty degrees.

The separation passage may also include an inlet section with the convergent section longitudinally between the inlet section and the first outlet passage and the second outlet passage. A cross-sectional area of the separation passage may remain within plus and minus two percent of a reference value as the inlet section extends longitudinally towards the convergent section.

The air-debris separator may also include a plurality of swirler vanes within the separation passage upstream of the convergent section. Each of the swirler vanes may project radially out from the center body to the outer wall.

The air-debris separator may also include a plurality of de-swirler vanes within the first outlet passage. Each of the de-swirler vanes may project radially out from the center body to the inner wall.

The powerplant apparatus may also include an engine core extending along an axis. The engine core may include a combustor, a diffuser plenum and the air-debris separator. The combustor may be arranged within the diffuser plenum. The combustor may include a combustion chamber and a combustor wall between the combustion chamber and the diffuser plenum. The combustor wall may include a quench aperture extending through the combustor wall to the combustion chamber. The air-debris separator may be configured to receive compressed air from the diffuser plenum into the separation passage. The second outlet passage may fluidly couple the separation passage to the quench aperture.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft powerplant.
FIG. 2 is a schematic illustration of a portion of the aircraft powerplant between a compressor section and a turbine section.
FIG. 3 is a perspective schematic illustration of a combustor.
FIG. 4 is a partial sectional illustration of a multi-layered combustor wall.
FIG. 5 is a side sectional illustration of an air-debris separator.
FIG. 6 is a partial perspective illustration of the air-debris separator at a downstream end thereof.
FIG. 7 is a perspective illustration of the air-debris separator.
FIG. 8 is a partial perspective cutaway illustration of the air-debris separator at the downstream end thereof.

### DETAILED DESCRIPTION

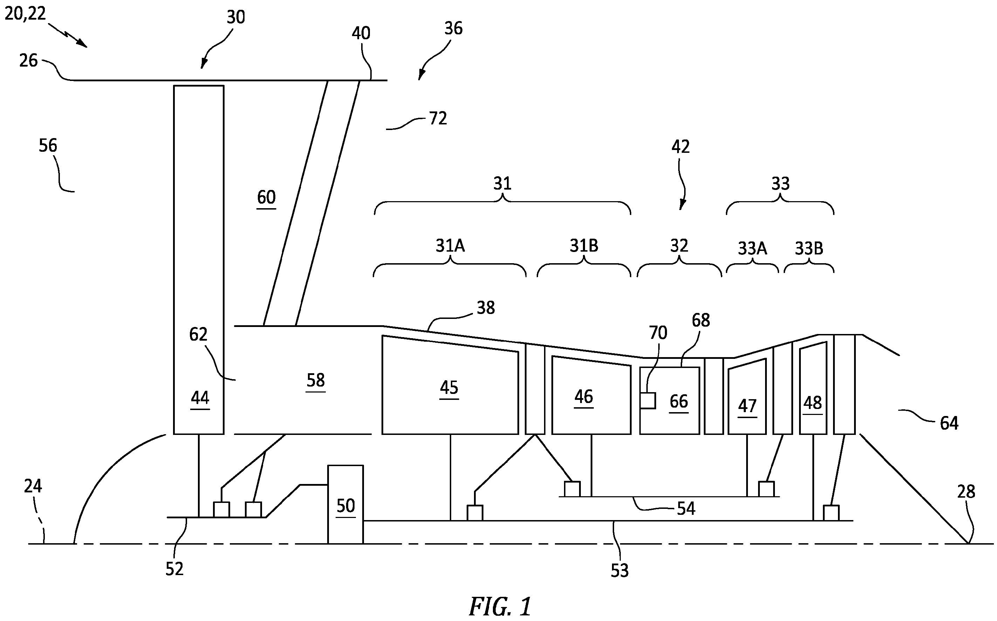

FIG. 1 illustrates a powerplant 20 for an aircraft. The aircraft may be an airplane, a drone (e.g., an unmanned aerial vehicle (UAV)) or any other manned or unmanned aerial vehicle or system. The aircraft powerplant 20 may be configured as, or otherwise included as part of, a propulsion system for the aircraft. The aircraft powerplant 20 of FIG. 1, for example, is configured as a turbofan turbine engine 22. The aircraft powerplant 20 of the present disclosure, however, is not limited to turbofan turbine engines nor to propulsion system applications. The aircraft powerplant 20, for example, may alternatively be configured as a turbojet turbine engine, a turboshaft turbine engine, a turboprop turbine engine, a propfan turbine engine, a pusher fan turbine engine, or any other combustion engine operable to drive rotation of a ducted or open propulsor rotor. In another example, the aircraft powerplant 20 may be configured as, or otherwise included as part of, a power generation system for the aircraft such as an auxiliary power unit (APU).

The turbine engine 22 of FIG. 1 extends axially along an axis 24 between a forward, upstream end 26 of the turbine engine 22 and an aft, downstream end 28 of the turbine engine 22. Briefly, the axis 24 may be a centerline axis of the turbine engine 22 and/or one or more of its members. The axis 24 may also or alternatively be a rotational axis of one or more rotating members of the turbine engine 22. The turbine engine 22 of FIG. 1 includes a fan section 30, a compressor section 31, a combustion section 32 and a turbine section 33. The compressor section 31 of FIG. 1 includes a low pressure compressor (LPC) section 31A and a high pressure compressor (HPC) section 31B. The turbine section 33 of FIG. 1 includes a high pressure turbine (HPT) section 33A and a low pressure turbine (LPT) section 33B.

The engine sections 30-33B of FIG. 1 are arranged within and/or are formed by a stationary engine structure 36; e.g., an engine housing. This engine structure 36 includes a stationary inner structure 38 (e.g., a core casing structure) and a stationary outer structure 40 (e.g., a fan casing structure). The inner structure 38 may house one or more of the engine sections 31A-33B; e.g., a core 42 of the turbine engine 22. The outer structure 40 may house at least the fan section 30.

Each of the engine sections 30, 31A, 31B, 33A and 33B includes a respective bladed rotor 44-48. Each of these bladed rotors 44-48 includes a plurality of rotor blades arranged circumferentially around and connected to one or more respective rotor disks and/or hubs. The rotor blades, for example, may be formed integral with or mechanically fastened, welded, brazed and/or otherwise attached to the respective rotor disk(s) and/or the respective hub(s).

The fan rotor 44 is connected to a geartrain 50, for example, through a fan shaft 52. The geartrain 50 and the LPC rotor 45 are connected to and driven by the LPT rotor 48 through a low speed shaft 53. The HPC rotor 46 is connected to and driven by the HPT rotor 47 through a high speed shaft 54. The engine shafts 52-54 are rotatably supported by a plurality of bearings which mount the engine shafts 52-54 to the inner structure 38. The rotatable members 44-48 and 52-54 of the turbine engine 22 may thereby rotate about the axis 24.

During turbine engine operation, air enters the turbine engine 22 through an airflow inlet 56 into the turbine engine 22. This air is directed through the fan section 30 and into a core flowpath 58 and a bypass flowpath 60. The core flowpath 58 extends sequentially through the engine sections 31A-33B from an inlet 62 into the core flowpath 58 to an exhaust 64 from the core flowpath 58. The air within the core flowpath 58 may be referred to as "core air". The bypass flowpath 60 extends through a bypass duct and bypasses the engine core 42. The air within the bypass flowpath 60 may be referred to as "bypass air".

The core air is compressed by the LPC rotor 45 and the HPC rotor 46 and directed into a combustion chamber 66 of a combustor 68 in the combustion section 32. Fuel is injected or otherwise delivered by one or more fuel injector assemblies 70 (one visible in FIG. 1) into the combustion chamber 66 and mixed with the compressed core air to provide a fuel-air mixture. This fuel-air mixture is ignited and combustion products thereof flow through and sequentially drive rotation of the HPT rotor 47 and the LPT rotor 48 before being directed out of the turbine engine 22 through the core exhaust 64. The rotation of the HPT rotor 47 and the LPT rotor 48 respectively drive rotation of the HPC rotor 46 and the LPC rotor 45 and, thus, compression of the air received from the core inlet 62. The rotation of the LPT rotor 48 also drives rotation of the fan rotor 44. The rotation of the fan rotor 44 propels the bypass air through the bypass flowpath 60 and out of the turbine engine 22 through an exhaust 72 from the bypass flowpath 60. The propulsion of the bypass air may account for a majority of thrust generated by the aircraft propulsion system and its turbine engine 22.

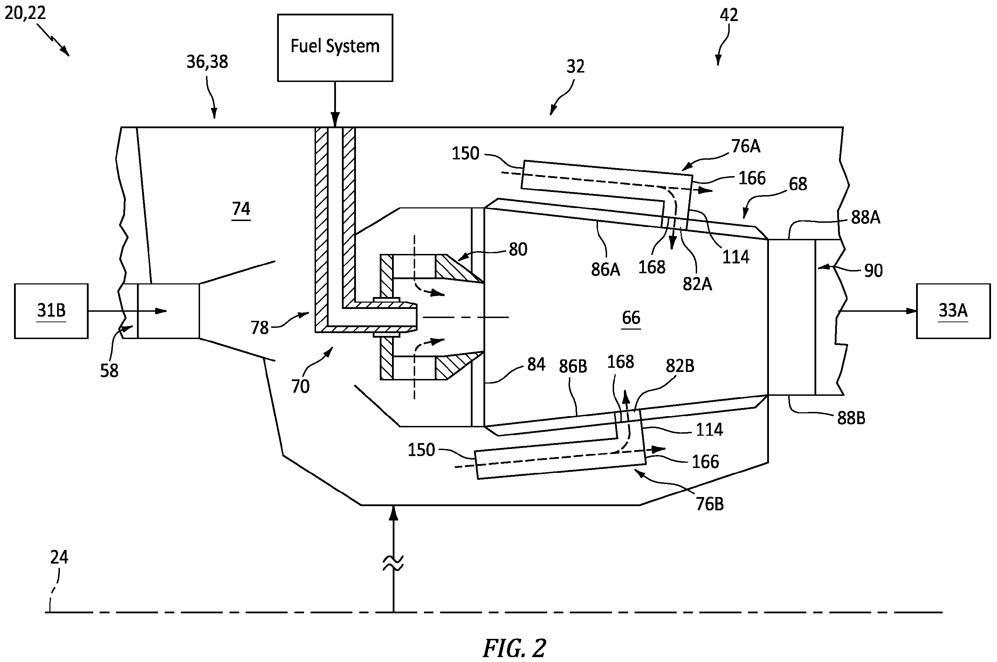

FIG. 2 illustrate a portion of the combustion section 32 along the core flowpath 58 between the HPC section 31B and the HPT section 33A. This combustion section 32 includes the combustor 68, a (e.g., annular) diffuser plenum 74, the one or more injector assemblies 70, one or more outer air-debris separators 76A, and one or more inner air-debris separators 76B. Briefly, the combustor 68 is disposed within (e.g., surrounded by) the diffuser plenum 74. This diffuser plenum 74 receives the compressed core air from the HPC section 31B for subsequent provision into the combustion chamber 66. Each injector assembly 70 of FIG. 2 includes a fuel injector 78 mated with an air swirler structure 80. The fuel injector 78 injects the fuel into the combustion chamber 66. The air swirler structure 80 directs some of the core air from the diffuser plenum 74 into the combustion chamber 66 in a manner that facilitates mixing the core air with the injected fuel. One or more igniters (not shown) ignite the fuel-air mixture within the combustion chamber 66. One or more quench apertures 82A, 82B (e.g., dilution holes) in each wall 86A, 86B of the combustor 68 direct additional core air from the diffuser plenum 74, via the respective air-debris separators 76A, 76B (generally referred to as "76"), into the combustion chamber 66 as quench air (e.g., dilution air). This quench air may stoichiometrically lean (e.g., quench) the combustion products (e.g., the ignited fuel-air mixture) within the combustion chamber 66.

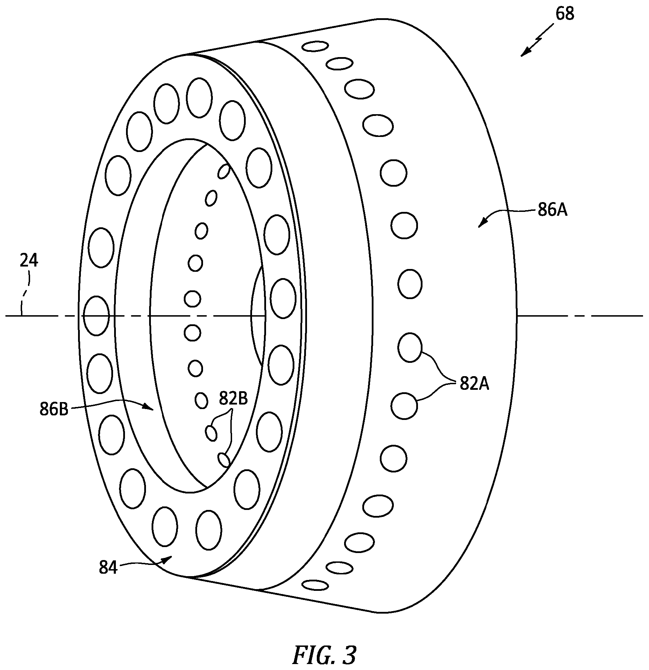

The combustor 68 may be configured as an annular combustor; e.g., an annular floating wall combustor. The combustor 68 of FIGS. 2 and 3, for example, includes an annular combustor bulkhead wall 84, the tubular outer combustor wall 86A, and the tubular inner combustor wall 86B. The bulkhead wall 84 of FIG. 2 extends radially between and to the inner combustor wall 86B and the outer combustor wall 86A. The bulkhead wall 84 may be connected (e.g., mechanically fastened or otherwise attached) to the inner combustor wall 86B and/or the outer combustor wall 86A. The inner combustor wall 86B and the outer combustor wall 86A each project axially along the axis 24 out from the bulkhead wall 84 towards the HPT section 33A. The inner combustor wall 86B of FIG. 2, for example, projects axially to and may be connected to an (e.g., tubular) inner platform 88B of a downstream stator vane array 90 in the HPT section 33A. The outer combustor wall 86A of FIG. 2 projects axially to and may be connected to an (e.g., tubular) outer platform 88A of the downstream stator vane array 90. With the arrangement of FIG. 2, the combustion chamber 66 is formed by and extends radially within the combustor 68 between and to the inner combustor wall 86B and the outer combustor wall 86A. The combustion chamber 66 is formed by and extends axially (in an upstream direction along the core flowpath 58) into the combustor 68 from the stator vane array 90 to the bulkhead wall 84. The combustion chamber 66 also extends within the combustor 68 circumferentially about (e.g., completely around) the axis 24, which may configure the combustion chamber 66 as a full-hoop annulus.

Referring to FIG. 3, the inner quench apertures 82A are arranged circumferentially about the axis 24 in an array (e.g., a circular array) in the inner combustor wall 86B. The outer quench apertures 82B are similarly arranged about the axis 24 in an array (e.g., a circular array) in the outer combustor wall 86A. Referring to FIG. 2, each of the quench apertures 82A, 82B (generally referred to as "82") extends (e.g., radially) through the respective combustor wall 86A, 86B (generally referred to as "86") to the combustion chamber 66. Each combustor wall 86 may also include (or may not include) one or more cooling apertures (not shown in FIGS. 2 and 3 for clarity of illustration); e.g., effusion aperture, cooling slots, etc. and may direct the core air into the combustion chamber 66. However, by contrast to the quench apertures 82, each cooling aperture may have a flow area (e.g., a cross-sectional area) which is significantly smaller than (e.g., 5x, 10x, 15x, 20x smaller than) a flow area (e.g., a cross-sectional area) of each quench aperture 82. Moreover, whereas the cooling apertures (when provided) are configured to facilitate cooling (e.g., film cooling) of a hot side of the respective combustor wall 86, the quench apertures 82 may be provided to tune combustion of the fuel-air mixture within the combustion chamber 66 as generally described above.

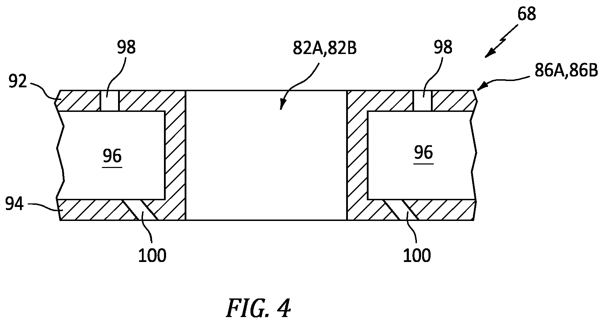

Each of the combustor walls 86 may each be configured as a multi-layer combustor wall; e.g., a hollow, dual-walled structure. For example, referring to FIG. 4, each combustor wall 86 may include a combustor wall shell 92, a combustor wall heat shield 94 (e.g., a liner) and one or more combustor wall cooling cavities 96 (e.g., impingement cavities) formed by and (e.g., radially) between the shell 92 and the heat shield 94. Each cooling cavity 96 may be fluidly coupled with the diffuser plenum 74 (see FIG. 2) through one or more shell cooling apertures 98 in the shell 92; e.g., impingement apertures. Each cooling cavity 96 may be fluidly coupled with the combustion chamber 66 (see FIG. 2) through one or more heat shield cooling apertures 100 in the heat shield 94; e.g., effusion apertures. Here, the quench apertures 82 are fluidly discrete from the cooling cavities 96, and each of the quench apertures 82 extends through the both the shell 92 and the heat shield 94; e.g., through an entire thickness of the respective combustor wall 86. Alternatively, any one or more of the combustor walls 86 may be configured as a single layer combustor wall.

Referring to FIG. 2, the outer air-debris separators 76A are located in the diffuser plenum 74. These outer air-debris separators 76A are located radially outboard of and may be next to the combustor 68 and its outer combustor wall 86A. The outer air-debris separators 76A are arranged circumferentially about the axis 24 in an array; e.g., a circular array. This array of the outer air-debris separators 76A may thereby circumscribe the combustor 68 and its outer combustor wall 86A. Similarly, the inner air-debris separators 76B of FIG. 2 are located in the diffuser plenum 74. These inner air-debris separators 76B are located radially inboard of and may be next to the combustor 68 and its inner combustor wall 86B. The inner air-debris separators 76B are arranged circumferentially about the axis 24 in an array; e.g., a circular array. This array of the inner air-debris separators 76B may thereby be circumscribed by the combustor 68 and its outer combustor wall 86A.

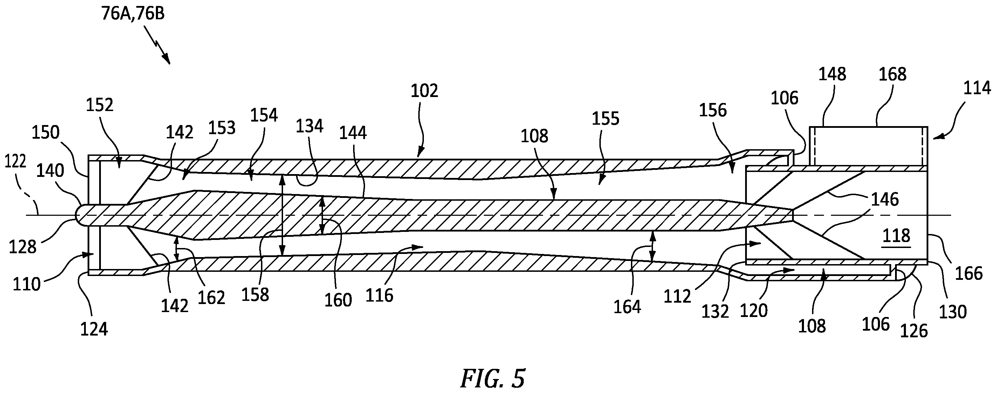

Referring to FIG. 5, each air-debris separator 76 may be configured as a cyclonic separator such as a vortex tube separator (VTS). The air-debris separator 76 of FIG. 5, for example, includes a separator outer wall 102, a separator inner wall 104, a separator endwall 106, a separator center body 108, a separator swirler 110, a separator de-swirler 112 and a dirty air outlet conduit 114. This air-debris separator 76 also includes a separator separation passage 116 (e.g., an inlet passage), a separator clean air outlet passage 118 and a separator dirty air outlet passage 120.

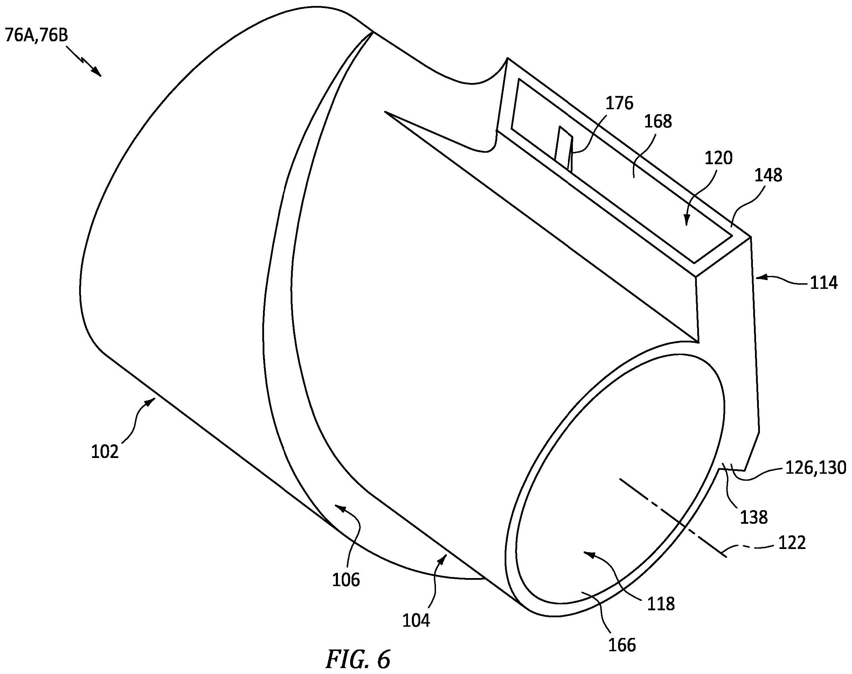

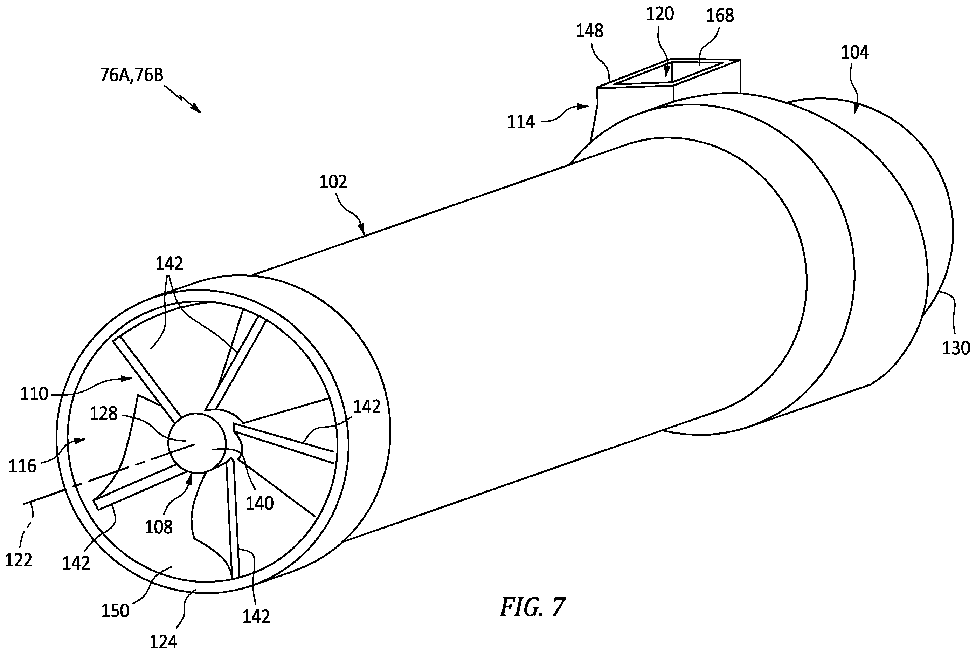

The separator outer wall 102 extends longitudinally along a longitudinal centerline 122 of the respective air-debris separator 76 from an upstream end 124 of the separator outer wall 102 to a downstream end 126 of the separator outer wall 102; see also FIG. 6. The outer wall upstream end 124 may be disposed at (e.g., on, adjacent or proximate) or otherwise near an upstream end 128 of the respective air-debris separator 76. The outer wall upstream end 124 of FIG. 5, for example, is (e.g., slightly) longitudinally recessed (in a downstream direction) from the separator upstream end 128. Similarly, the outer wall downstream end 126 may be disposed at or near a downstream end 130 of the respective air-debris separator 76. The outer wall downstream end 126 of FIG. 6, for example, is aligned with the separator downstream end 130. Referring to FIG. 7, the separator outer wall 102 extends circumferentially about (e.g., completely around) the separator centerline 122 providing the separator outer wall 102 with, for example, a full-hoop (e.g., tubular) geometry.

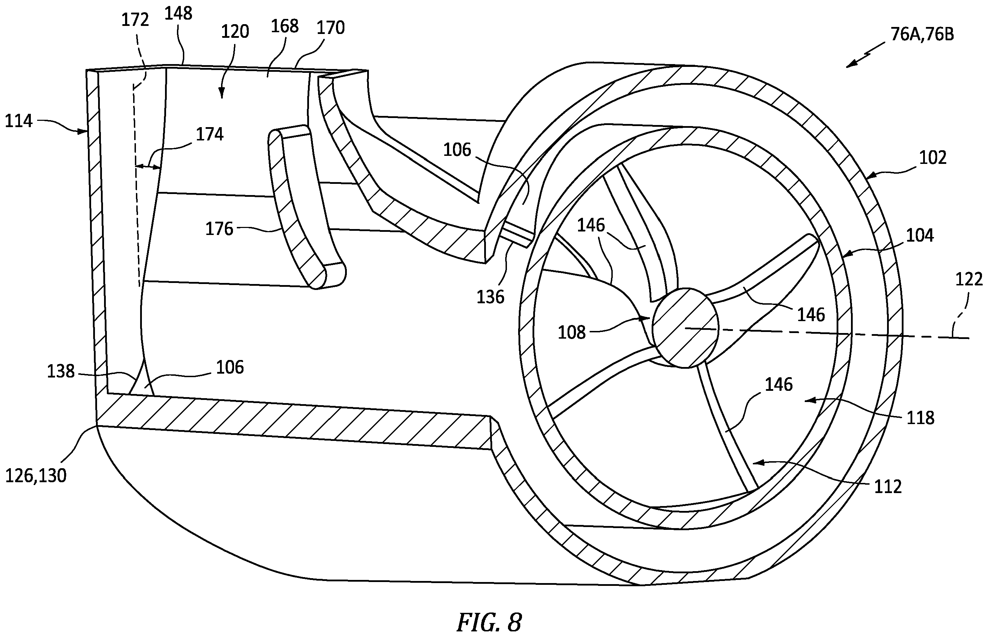

Referring to FIG. 5, the separator inner wall 104 is disposed partially within an inner bore of the separator outer wall 102. The separator inner wall 104 of FIG. 5, for example, projects longitudinally along the separator centerline 122 from the separator downstream end 130, into the inner bore of the separator outer wall 102, to an upstream end 132 of the separator inner wall 104. Here, the inner wall upstream end 132 is longitudinally spaced from the outer wall upstream end 124 by a longitudinal distance along the separator centerline 122 which may be greater than at least two-thirds (2/3), four-fifths (4/5) or seven eighths (7/8) of a longitudinal length of the respective air-debris separator 76. Referring to FIG. 8, the separator inner wall 104 extends circumferentially about (e.g., completely around) the separator centerline 122 providing the separator inner wall 104 with, for example, a full-hoop (e.g., tubular) geometry.

Referring to FIGS. 6 and 8, the separator endwall 106 is disposed radially between and is connected to (e.g., formed integral with or otherwise attached to) the separator inner wall 104 and the separator outer wall 102. The separator endwall 106 of FIGS. 6 and 8, for example, projects radially out from a radial outer side of the separator inner wall 104 to a radial inner side 134 of the separator outer wall 102 (see FIG. 5). The separator endwall 106 extends circumferentially about (e.g., partially around) the separator centerline 122 and the separator inner wall 104 from an upstream end 136 of the separator endwall 106 to a downstream end 138 of the separator endwall 106. As the separator endwall 106 extends circumferentially, the separator endwall 106 also extends longitudinally along the separator centerline 122 from the endwall upstream end 136 to the endwall downstream end 138. Referring to FIG. 6, the separator endwall 106 may thereby be configured as a helical endwall; e.g., a volute endwall.

Referring to FIG. 5, the separator center body 108 is disposed partially within the inner bore of the separator outer wall 102 and partially within an inner bore of the separator inner wall 104. An upstream portion of the separator center body 108, for example, is centered in and extends longitudinally in the inner bore of the separator outer wall 102. However, an upstream nose 140 of the separator center body 108 and its upstream portion may be disposed outside and upstream of the separator outer wall 102; e.g., at the separator upstream end 128. A downstream portion of the separator center body 108 is centered in and extends longitudinally in the inner bore of the separator inner wall 104. More particularly, the downstream portion of the separator center body 108 projects longitudinally along the separator centerline 122 out from the inner bore of the separator outer wall 102 and into the inner bore of the separator inner wall 104 partially towards the separator downstream end 130.

Referring to FIG. 7, the separator swirler 110 may be arranged at (or near) the separator upstream end 128 / the outer wall upstream end 124. The separator swirler 110 of FIG. 7 includes a plurality of swirler vanes 142 (e.g., airfoils) disposed within the inner bore of the separator outer wall 102. These swirler vanes 142 are arranged circumferentially about the separator centerline 122 and the separator center body 108 in an array; e.g., a circular array. Each of the swirler vanes 142 is disposed radially between and connected to (e.g., formed integral with or otherwise attached to) the separator center body 108 and the separator outer wall 102. Each of the swirler vanes 142 of FIG. 5, for example, projects radially out from a radial outer side 144 of the separator center body 108, radially across the separation passage 116, to the inner side 134 of the separator outer wall 102. The swirler vanes 142 may thereby structurally connect the separator center body 108 to the separator outer wall 102. In addition, the swirler vanes 142 are configured to impart swirl to and/or otherwise condition the air flowing into / through the separation passage 116.

The separator de-swirler 112 may be arranged near the separator downstream end 130; e.g., at the inner wall upstream end 132. The separator de-swirler 112 of FIG. 8 includes a plurality of de-swirler vanes 146 (e.g., airfoils) disposed within the inner bore of the separator inner wall 104. These de-swirler vanes 146 are arranged circumferentially about the separator centerline 122 and the separator center body 108 in an array; e.g., a circular array. Each of the de-swirler vanes 146 is disposed radially between and connected to (e.g., formed integral with or otherwise attached to) the separator center body 108 and the separator inner wall 104. Each of the de-swirler vanes 146 of FIG. 5, for example, projects radially out from the outer side 144 of the separator center body 108, radially across the clean air outlet passage 118, to a radial inner side of the separator inner wall 104. The de-swirler vanes 146 may thereby structurally connect the separator center body 108 to the separator inner wall 104. In addition, the de-swirler vanes 146 are configured to de-swirl and/or otherwise condition the air flowing into / through / out of the clean air outlet passage 118.

Referring to FIG. 8, the outlet conduit 114 is connected to (e.g., formed integral with or otherwise attached to) the separator outer wall 102, the separator inner wall 104 and the separator endwall 106 at or near the separator downstream end 130. The outlet conduit 114 projects (e.g., tangentially) out from the separator outer wall 102 and the separator inner wall 104 to a distal end 148 of the outlet conduit 114.

Referring to FIG. 5, the separation passage 116 extends longitudinally within the respective air-debris separator 76 along the separator centerline 122 from (a) an airflow inlet 150 into the respective air-debris separator 76 and its separation passage 116 to (b) an inlet into the clean air outlet passage 118 and an inlet into the dirty air outlet passage 120. The separator inlet 150 of FIG. 5 is disposed at the separator upstream end 128 / the outer wall upstream end 124. At a downstream end of the separation passage 116 / the inner wall upstream end 132 of FIG. 5, the clean air outlet passage 118 and the dirty air outlet passage 120 are fluidly coupled to the separation passage 116 in parallel. The separation passage 116 extends radially between and is formed by the outer side 144 of the separator center body 108 and the inner side 134 of the separator outer wall 102. The separation passage 116 extends circumferentially about (e.g., completely around) the separator centerline 122 and the separator center body 108 providing the separation passage 116 with, for example, a full-hoop (e.g., annular) geometry. The separator center body 108 and its outer side 144 may thereby form a radial inner peripheral boundary of the separation passage 116. The separator outer wall 102 and its inner side 134 may form a radial outer peripheral boundary of the separation passage 116.

The separation passage 116 may be configured with a convergent-divergent geometry. The separation passage 116 of FIG. 5, for example, is divided into a plurality of longitudinally extending, annular sections - an inlet section 152, an upstream convergent section 153, a downstream convergent section 154, an upstream divergent section 155 and a downstream divergent section 156. These passage sections 152-156 are arranged sequentially end-to-end along the separator centerline 122 between the separator inlet 150 and the outlet passages 118 and 120. The separator outer wall 102 and the separator center body 108 are configured (e.g., sized and/or shaped) along these passage sections 152-156 to provide the separation passage 116 with its convergent-divergent geometry. The convergent-divergent geometry may be defined by various dimensional parameters such as, but not limited to, a radial outer diameter 158 of the separation passage 116 (e.g., a radial outer diameter to the inner side 134 of the separator outer wall 102), a radial inner diameter 160 of the separation passage 116 (e.g., a radial inner diameter to the outer side 144 of the separator center body 108), and/or a cross-sectional area of the separation passage 116 when viewed in a reference plane perpendicular to the separator centerline 122.

The inlet section 152 projects longitudinally into the respective air-debris separator 76 in the downstream direction from the separator inlet 150 to the upstream convergent section 153. At least adjacent the separator inlet 150 (or along an entire longitudinal length of the inlet section 152), the passage outer diameter 158, the passage inner diameter 160 and/or the passage cross-sectional area are maintained completely uniform or substantially uniform (e.g., within plus and/or minus two or five percent of a reference value (+/- 2% or 5%)) as the inlet section 152 extends longitudinally along the separator centerline 122.

The upstream convergent section 153 extends longitudinally within the respective air-debris separator 76 in the downstream direction from the inlet section 152 to the downstream convergent section 154. Along at least a portion or an entirety of a longitudinal length of the upstream convergent section 153, (a) the passage outer diameter 158 (e.g., continuously and/or uniformly) decreases, (b) the passage inner diameter 160 (e.g., continuously and/or uniformly) increases, and/or (c) the passage cross-sectional area (e.g., continuously and/or uniformly) decreases as the upstream convergent section 153 extends longitudinally in the downstream direction along the separator centerline 122. For example, a value of the passage cross-sectional area at an intersection between the upstream convergent section 153 and the downstream convergent section 154 may be between twenty-five percent (25%) and sixty-five percent (65%) (e.g., forty percent (40%)) of a value of the passage cross-sectional area at an intersection between the inlet section 152 and the upstream convergent section 153. The upstream convergent section 153 has a convergence angle 162 measured between the outer side 144 of the separator center body 108 and the inner side 134 of the separator outer wall 102. This convergence angle 162 may be between fifteen degrees (15°) and fifty degrees (50°) (e.g., twenty degrees (20°)) along at least a portion or the entirety of a longitudinal length of the upstream convergent section 153.

The downstream convergent section 154 extends longitudinally within the respective air-debris separator 76 in the downstream direction from the upstream convergent section 153 to the upstream divergent section 155. Along at least a portion or an entirety of a longitudinal length of the downstream convergent section 154, (a) the passage outer diameter 158 (e.g., continuously and/or uniformly) decreases, (b) the passage inner diameter 160 (e.g., continuously and/or uniformly) decreases, and/or (c) the passage cross-sectional area is maintained completely uniform or substantially uniform (e.g., within plus and/or minus five or ten percent of a reference value (+/- 5% or 10%)) as the downstream convergent section 154 extends longitudinally in the downstream direction along the separator centerline 122. For example, a value of the passage cross-sectional area at an intersection between the downstream convergent section 154 and the upstream divergent section 155 (e.g., an inflection location) may be equal to or within plus and/or minus five or ten percent (+/- 5% or 10%) of a value of the passage cross-sectional area at an intersection between the upstream convergent section 153 and the downstream convergent section 154.

The upstream divergent section 155 extends longitudinally within the respective air-debris separator 76 in the downstream direction from the downstream convergent section 154 to the downstream divergent section 156. Along at least a portion or an entirety of a longitudinal length of the upstream divergent section 155, (a) the passage outer diameter 158 (e.g., continuously and/or uniformly) increases, (b) the passage inner diameter 160 is maintained completely uniform or substantially uniform (e.g., within plus and/or minus two or five percent of a reference value (+/- 2% or 5%)), and/or (c) the passage cross-sectional area (e.g., continuously and/or uniformly) increases as the upstream divergent section 155 extends longitudinally in the downstream direction along the separator centerline 122. The upstream convergent section 153 has a divergence angle 164 measured between the outer side 144 of the separator center body 108 and the inner side 134 of the separator outer wall 102. This divergence angle 164 may be between two degrees (2°) and four degrees (4°) (e.g., three degrees (3°)) along at least a portion or the entirety of a longitudinal length of the upstream divergent section 155.

The downstream divergent section 156 extends longitudinally within the respective air-debris separator 76 in the downstream direction from the upstream divergent section 155 to the outlet passages 118 and 120. Along at least a portion or an entirety of a longitudinal length of the downstream divergent section 156, (a) the passage outer diameter 158 (e.g., continuously and/or uniformly) increases, (b) the passage inner diameter 160 (e.g., continuously and/or uniformly) decreases, and/or (c) the passage cross-sectional area (e.g., continuously and/or uniformly) increases as the downstream divergent section 156 extends longitudinally in the downstream direction along the separator centerline 122. A value of the passage cross-sectional area at an intersection between the upstream divergent section 155 and the downstream divergent section 156 may be equal to or within plus and/or minus ten or twenty percent (+/- 10% or 20%) of the value of the passage cross-sectional area at the intersection between the inlet section 152 and the upstream convergent section 153.

The clean air outlet passage 118 extends longitudinally within the respective air-debris separator 76 along the separator centerline 122 from the downstream end of the separation passage 116 and its downstream divergent section 156 to a clean air outlet 166 from the respective air-debris separator 76 and its clean air outlet passage 118. The separator clean air outlet 166 of FIG. 5 is disposed at the separator downstream end 130. An upstream portion of the clean air outlet passage 118 extends radially between the separator center body 108 and the separator inner wall 104. A downstream portion of the clean air outlet passage 118 projects radially out from the separator centerline 122 to the separator inner wall 104. The clean air outlet passage 118 extends circumferentially about (e.g., completely around) the separator centerline 122 and the separator center body 108. The separator center body 108 may thereby form a radial inner peripheral boundary of the upstream portion of the clean air outlet passage 118. The separator inner wall 104 may form a radial outer peripheral boundary of the (e.g., entire) clean air outlet passage 118.

The dirty air outlet passage 120 extends longitudinally within the respective air-debris separator 76 along the separator centerline 122 from the downstream end of the separation passage 116 and its downstream divergent section 156 to the separator endwall 106. The dirty air outlet passage 120 also spiral around the separator centerline 122 and the separator inner wall 104, along the separator endwall 106, from the downstream end of the separation passage 116 to the outlet conduit 114. Referring to FIG. 8, the dirty air outlet passage 120 then extends through the outlet conduit 114 to a dirty air outlet 168 from the respective air-debris separator 76 and its dirty air outlet passage 120.

Within the outlet conduit 114, the dirty air outlet passage 120 may laterally flare outwards as the dirty air outlet passage 120 projects out to its separator dirty air outlet 168. For example, a sidewall 170 of the outlet conduit 114 of FIG. 8 may be angularly offset from a centerline of the outlet conduit 114 (and a reference line 172 parallel with the centerline) by an included offset angle 174. This sidewall offset angle 174 may be a non-zero acute angle between, for example, seven and fifteen degrees (7-15°); e.g., twelve degrees (12°). With this arrangement, flow separation along the sidewall 170 may be reduced. In addition or alternatively, the respective air-debris separator 76 may include a turning vane 176 within the outlet conduit 114 to guide flow through the dirty air outlet passage 120 towards its separator dirty air outlet 168.

Referring to FIG. 2, the separator inlet 150 of each air-debris separator 76 is fluidly coupled with an upstream region of the diffuser plenum 74. The separator clean air outlet 166 of each air-debris separator 76 is fluidly coupled with a downstream region of the diffuser plenum 74. The separator dirty air outlet 168 is fluidly coupled to a respective one of the quench apertures 82. For example, each quench aperture 82 may be paired with a respective one of the air-debris separators 76.

During turbine engine operation, referring to FIG. 5, each air-debris separator 76 receives diffused core air from the upstream region of the diffuser plenum 74 (see FIG. 2). Under certain conditions, this core air may include debris such as, but not limited to, dirt, sand or other foreign particulate matter ingesting into the turbine engine 22 (see FIG. 1). Within each air-debris separator 76, the incoming (e.g., dirty) air is swirled by the separator swirler 110 around the separator center body 108. This swirling may cause the relatively heavy debris to move towards / to the inner side 134 of the separator outer wall 102 while the lighter clean air may flow closer to and along the separator center body 108 and its outer side 144. The convergent sections 153 and 154 may increase a velocity of the swirling air to provide additional force to move the relatively heavy debris towards / to the inner side 134 of the separator outer wall 102. The divergent sections 155 and 156 may then reduce the swirling air velocity to reduce pressure loss at the separator de-swirler 112. The debris along with a portion of the core air flows into the dirty air outlet passage 120, and the dirty air outlet passage 120 directs that dirty air into the combustion chamber 66 (see FIG. 2) through the respective quench aperture 82 (see FIG. 2). The clean air, by contrast, flows into the clean air outlet passage 118 and is directed into the downstream region of the diffuser plenum 74 (see FIG. 2) through the respective separator clean air outlet 166. With this arrangement, the dirty air and its debris is directed through a relatively large openings - the respective quench apertures 82 (see FIG. 2). The clean air, on the other hand, may flow through smaller downstream apertures / passages; e.g., combustor wall cooling apertures, cooling apertures in the downstream stator vane array 90 (see FIG. 2), etc. Since the clean air includes little or no debris, the foregoing separation of the debris may reduce likelihood of debris accumulating on an engine component and clogging its relatively small apertures / passages.

While the air-debris separators 76 are described above as directing the dirty air with the debris into the combustion chamber 66, it is contemplated this dirty air may also or alternatively be routed to other destinations. For example, any one or more or all of the air-debris separators 76 may be configured to also (or alternatively) vent the dirty air outside of the engine core 42; e.g., into the bypass flowpath 60.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for a powerplant (20), comprising:
an air-debris separator (76) including a center body (108), an inner wall (104), an outer wall (102), a separation passage (116), a first outlet passage (118) and a second outlet passage (120);
the center body (108) extending longitudinally along a longitudinal centerline (122);
the inner wall (104) extending longitudinally along and circumferentially about the center body (108);
the outer wall (102) extending longitudinally along and circumferentially about the center body (108) and the inner wall (104);
the separation passage (116) extending longitudinally within the air-debris separator (76) to, and fluidly coupled in parallel with, the first outlet passage (118) and the second outlet passage (120), the separation passage (116) formed by and radially between the center body (108) and the outer wall (102), and the separation passage (116) comprising a convergent section (154) and a radial outer diameter (158) that decreases as the convergent section (154) extends longitudinally towards the first outlet passage (118) and the second outlet passage (120);
the first outlet passage (118) formed by and radially between the center body (108) and the inner wall (104); and
the second outlet passage (120) formed by and radially between the inner wall (104) and the outer wall (102).

2. The apparatus of claim 1, wherein the separation passage (116) further comprises a radial inner diameter (160) that decreases as the convergent section (154) extends longitudinally towards the first outlet passage (118) and the second outlet passage (120) and the radial outer diameter (158) decreases.

3. The apparatus of claim 1 or 2, wherein a cross-sectional area of the separation passage (116) remains within plus and minus ten percent of a reference value as the convergent section (154) extends longitudinally towards the first outlet passage (118) and the second outlet passage (120) and the radial outer diameter (158) decreases.

4. The apparatus of claim 1, 2 or 3, wherein:
the separation passage (116) further comprises a divergent section (155) longitudinally between the convergent section (154) and the first outlet passage (118) and the second outlet passage (120); and
the radial outer diameter (158) increases as the divergent section (155) extends longitudinally towards the first outlet passage (118) and the second outlet passage (120),
wherein, optionally, a divergence angle (164) between an outer side (144) of the center body (108) and an inner side (134) of the outer wall (102) along the divergent section (155) is between one degree and three degrees.

5. The apparatus of claim 4, wherein the separation passage (116) further comprises a radial inner diameter (160) that remains uniform as the divergent section (155) extends longitudinally towards the first outlet passage (118) and the second outlet passage (120) and the radial outer diameter (158) increases.

6. The apparatus of claim 5, wherein:
the divergent section (155) is an upstream divergent section, and the separation passage (116) further comprises a downstream divergent section (156) longitudinally between the upstream divergent section (155) and the first outlet passage (118) and the second outlet passage (120);
the radial outer diameter (158) increases as the downstream divergent section (156) extends longitudinally towards the first outlet passage (118) and the second outlet passage (120); and
the radial inner diameter (160) decreases as the downstream divergent section (156) extends longitudinally towards the first outlet passage (118) and the second outlet passage (120) and the radial outer diameter (158) increases.

7. The apparatus of claim 4, 5 or 6, wherein a cross-sectional area of the separation passage (116) increases as the divergent section (155) extends longitudinally towards the first outlet passage (118) and the second outlet passage (120) and the radial outer diameter (158) increases.

8. The apparatus of claim 4, wherein the separation passage (116) further comprises a radial inner diameter (160) that decreases as the divergent section (155) extends longitudinally towards the first outlet passage (118) and the second outlet passage (120) and the radial outer diameter (158) increases.

9. The apparatus of any preceding claim, wherein:
the convergent section (154) is a downstream convergent section, and the separation passage (116) further comprises an upstream convergent section (153) with the downstream convergent section (154) longitudinally between the upstream convergent section (153) and the first outlet passage (118) and the second outlet passage (120);
the radial outer diameter (158) decreases as the upstream convergent section (153) extends longitudinally towards the first outlet passage (118) and the second outlet passage (120); and
the separation passage (116) further comprises a radial inner diameter (160) that increases as the upstream convergent section (153) extends longitudinally towards the downstream convergent section (154) and the radial outer diameter (158) increases.

10. The apparatus of any preceding claim, wherein:
the convergent section (154) is a downstream convergent section, and the separation passage (116) further comprises an upstream convergent section (153) with the downstream convergent section (154) longitudinally between the upstream convergent section (153) and the first outlet passage (118) and the second outlet passage (120); and
a cross-sectional area of the separation passage (116) decreases as the upstream convergent section (153) extends longitudinally towards the downstream convergent section (154),
wherein, optionally, a convergence angle (162) between an outer side (144) of the center body and an inner side (134) of the outer wall (102) along the upstream convergent section (153) is between fifteen degrees and fifty degrees.

11. The apparatus of any preceding claim, wherein:
the separation passage (116) further comprises an inlet section (152) with the convergent section (154) longitudinally between the inlet section (152) and the first outlet passage (118) and the second outlet passage (120); and
a cross-sectional area of the separation passage (116) remains within plus and minus two percent of a reference value as the inlet section (152) extends longitudinally towards the convergent section (154).

12. The apparatus of any preceding claim, wherein:
the air-debris separator (76) further includes a plurality of swirler vanes (142) within the separation passage (116) upstream of the convergent section (154); and each of the plurality of swirler vanes (142) projects radially out from the center body (108) to the outer wall (102); and/or
the air-debris separator (76) further includes a plurality of de-swirler vanes (146) within the first outlet passage (118); and each of the plurality of de-swirler vanes (146) projects radially out from the center body (108) to the inner wall (104).

13. The apparatus of any preceding claim, further comprising:
an engine core (42) extending along an axis (24), the engine core (42) including a combustor (68), a diffuser plenum (74) and the air-debris separator (76);
the combustor (68) arranged within the diffuser plenum (74), the combustor (68) including a combustion chamber (66) and a combustor wall (86A) between the combustion chamber (66) and the diffuser plenum (74), and the combustor wall (86A) comprising a quench aperture (82A) extending through the combustor wall (86A) to the combustion chamber (66); and
the air-debris separator (76) configured to receive compressed air from the diffuser plenum (74) into the separation passage (116), and the second outlet passage (120) fluidly coupling the separation passage (116) to the quench aperture (82A).

14. An apparatus for a powerplant (20), comprising:
an air-debris separator (76) including a separation passage (116), a clean air outlet passage (118), a dirty air outlet passage (120) and a separator swirler (110) disposed within the separation passage (116), wherein a radial outer diameter (158) of the separation passage (116) decreases as the separation passage (116) extends in a downstream direction longitudinally away from the separator swirler (110) and towards the clean air outlet passage (118) and the dirty air outlet passage (120);
the air-debris separator (76) configured to separate an airflow received within the separation passage (116) and swirled by the separator swirler (110) into a clean airflow and a dirty airflow;
the air-debris separator (76) configured to direct the clean airflow into the clean air outlet passage (118); and
the air-debris separator (76) configured to direct the dirty airflow into the dirty air outlet passage (120),
wherein, optionally:
the radial outer diameter (158) of the separation passage (116) decreases as the separation passage (116) extends in the downstream direction to an inflection location; and
the radial outer diameter (158) of the separation passage (116) increases as the separation passage (116) extends in the downstream direction away from the inflection location towards the clean air outlet passage (118) and the dirty air outlet passage (120).

15. An apparatus for a powerplant (20), comprising:
an air-debris separator (76) including a center body (108), an inner wall (104), an outer wall (102), a separation passage (116), a first outlet passage (118), a second outlet passage (120) and a plurality of swirler vanes (142);
the center body (108) extending longitudinally along a longitudinal centerline (122);
the inner wall (104) extending longitudinally along and circumferentially about the center body (108);
the outer wall (102) extending longitudinally along and circumferentially about the center body (108) and the inner wall (104);
the separation passage (116) extending longitudinally within the air-debris separator (76) to, and fluidly coupled in parallel with, the first outlet passage (118) and the second outlet passage (120), the separation passage (116) formed by and radially between the center body (108) and the outer wall (102), and the separation passage (116) comprising a convergent section (154) and a divergent section (155) which extends longitudinally from the convergent section (154) towards the first outlet passage (118) and the second outlet passage (120);
the first outlet passage (118) formed by and radially between the center body (108) and the inner wall (104);
the second outlet passage (120) formed by and radially between the inner wall (104) and the outer wall (102); and
the plurality of swirler vanes (142) arranged within the separation passage (116) upstream of the convergent section (154), and each of the plurality of swirler vanes (142) extending radially between the center body (108) and the outer wall (102),
wherein, optionally, at least one of:
a cross-sectional area of the separation passage (116) remains within plus and minus ten percent of a reference value as the convergent section (154) extends longitudinally to the divergent section (155); or
the cross-sectional area of the separation passage (116) increases as the divergent section (154) extends longitudinally away from the convergent section (153) towards the first outlet passage (118) and the second outlet passage (120).
